# EUROPEAN PATENT SPECIFICATION

(11) **EP 3 421 833 B1**
(45) Date of publication and mention of the grant of the patent: **31.07.2019**
(21) Application number: 18175511.7
(22) Date of filing: 01.06.2018
(51) Int. Cl.: F16D 65/12

(54) **A LOW MASS BRAKE DISC WITH IMPROVED SHAPE OF COOLING RIBS**
BREMSSCHEIBEN MIT GERINGER MASSE MIT VERBESSERTER FORM DER KÜHLRIPPEN
DISQUE DE FREIN À FAIBLE MASSE PRÉSENTANT UNE FORME AMÉLIORÉE DES NERVURES DE REFROIDISSEMENT

(30) Priority: 22.06.2017 SI 201700188
(43) Date of publication of application: 02.01.2019
(73) Proprietor: Kovis, d.o.o., 8250 Brezice (SI)
(72) Inventor: GRIVC, Uros, 8290 Sevnica (SI); DERZIC, David, 8261 Jesenice na Dolenjskem (SI)
(74) Representative: Jersan, Tatjana

(56) References cited:
- WO-A1-2015/092671
- DE-A1-102013 210 700
- GB-A- 2 060 796
- US-A1- 2010 084 231

## Description

The present invention relates to brake discs, i.e. to an improved construction of a brake disk for disc brakes especially for railway vehicles. Disc brakes are formed from two parts, a brake disc and a hub. Hub is mounted on the axle by pressing with the pressing machine, while brake disc is mounted on the hub by a connecting element, which is preferably bolt, or by other type of connection. On the inner periphery of the brake disc and on the outer periphery of the hub mounting brackets are formed, which are positioned at even intervals. When joined together, they form a solid connection, which then serves to transmit braking torque and forces.

A brake disc is formed of two coaxial annular plates which are interconnected by radial ribs or a helical portion. A brake disc of a disc brake must dissipate a very large amount of thermal energy, for example when braking a heavy vehicle, i.e. railway vehicle, or a vehicle which travels at high speed. In the course of such braking the high kinetic energy of the vehicle is transformed into heat energy which heats a brake disc and consequently influences the efficiency of the disc brake. Due to the temperature rise, the efficiency of the disc brake is reduced, i.e. the friction coefficient decreases and thus the friction force decreases. High temperatures and local differences in temperature can cause mechanical damage to the surface of the brake disc which results in cracks and plastic deformation of the brake disc.

It is known to improve the capability of the disc to dissipate heat energy by forming therein passages for the passage of air so as to increase the surfaces of contact of the disc and the cooling air (see for instance document DE102013210700 A1). However said passages can result in the formation of cracks which can ultimately result in breakage of the disc.

In document GB 1449512 a disc for a disc brake is disclosed which comprises two coaxial annular plates interconnected by cross members defining between them passages for the flow of cooling air, wherein a plurality of bands of cross members are provided, the cross members of each band being disposed along a respective circular path and being substantially evenly spaced apart. The cooling is improved with respect to that obtained with discs having radial ribs, since, on one hand, the cylindrical cross members produce a whirling flow of the air and, on the other hand, the surface of exchange is greater.

In document SI23474 a disc for a disc brake is disclosed which comprises two coaxial annular plates (discs) interconnected by cross members defining between them passages for the flow of cooling air and which comprises on the inner sides of discs additional cooling elements in a form of protrusions which are situated linear around cross members in a raster form. With said protrusions the heat exchange area of the disc is increased which results in better heat transfer into the surrounding during braking. The cooling intensity is also increased due to the increased air turbulence between the discs.

However if the amount of heat to be dissipated is great and the surfaces of contact between the air and the discs is still insufficient for adequate and fast heat dissipation, there was a need for further improvement of cooling of a brake disc.

In brake discs especially for railway vehicles, adequate and fast heat dissipation is predominantly limited by heat conduction properties of brake disc material which is still relatively high for grey cast iron from which brake discs are made for railway vehicles and also by the dimensions of the disc. Heat dissipation towards the center of the brake disc is too slow which can be problematic especially when the train composition already stops or for emergency and service stops.

So it is desirable to dissipate heat from the friction surfaces even faster, so the temperatures would be lower and brake disc would be exposed to less thermal strain, which would benefit in further reduction of the mass of the brake disc, in less deformation of the brake disc, friction properties would remain better, and less wear would be caused on the braking elements during braking.

This is achieved with the improved construction of a brake disk according to the invention. With the proposed construction, higher heat conduction away from the friction plates is achieved by increasing the heat flux behind the friction plates where cooling ribs are located.

This is done by including additional small hyperbolically shaped cooling ribs and low profile ribs to the load carrying cooling ribs, which interconnect two coaxial annular plates, wherein low profile ribs connect load carrying cooling ribs and/or small hyperbolically shaped cooling ribs. Low profile ribs also connect some of the load carrying cooling ribs which are positioned along the outer and the inner end of the annular plates with the outer and the inner edge of said annular plates.

Said small hyperbolically shaped cooling ribs and low profile ribs act as thermal heat absorbers or capacitors and because they are distributed more uniformly and close to the heat source, i.e. the friction surface, temperature of friction surfaces is decreased. Also because these ribs are close to the heat source they heat up faster so larger area of the brake discs' cooling area gets hotter which improves heat convection. Additionally the cross sectional area at the base of the cooling ribs, i.e. load carrying cooling ribs, small hyperbolically shaped cooling ribs and low profile ribs, is increased. With this design the heat dissipation during braking is improved, as forced heat convection is not fast enough and has negligible effect on heat dissipation while short and powerful braking occurs. Namely ribs aren't heated up yet to dissipate heat which is dependent on temperature of the cooling ribs' surfaces and air flowing through the brake discs center. When cooling ribs start to heat up the train has already stopped or moving really slowly which negatively effects thermal convection even further. With this construction the mass from the centre of the brake disc is moved more towards the disc plates, the number of load carrying cooling ribs is reduced and consequently the mass of the brake disc is reduced.

The invention will be further described below and presented on figures:
Fig. 1 presents a brake disc according to the invention
Fig. 2 presents a sectional of a brake disc according to the invention
Fig. 3 presents a cross-section of a brake disc according to the invention
Fig. 4 presents a graph which shows ventilation losses for different designs of brake discs
Fig. 5 presents a graph which shows drag brake characteristics for different designs of brake discs
Fig. 6 presents a graph which shows emergency stop characteristics for different designs of brake discs.

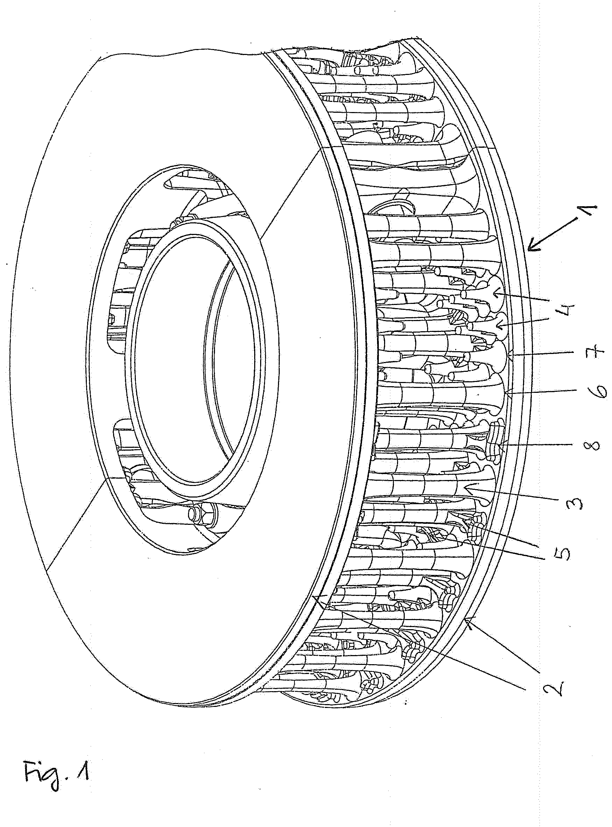

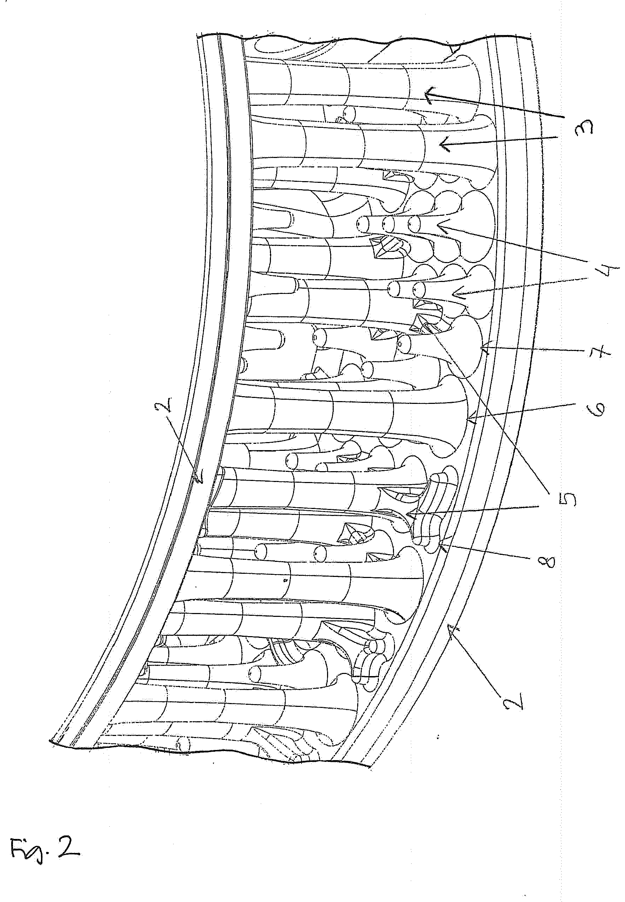

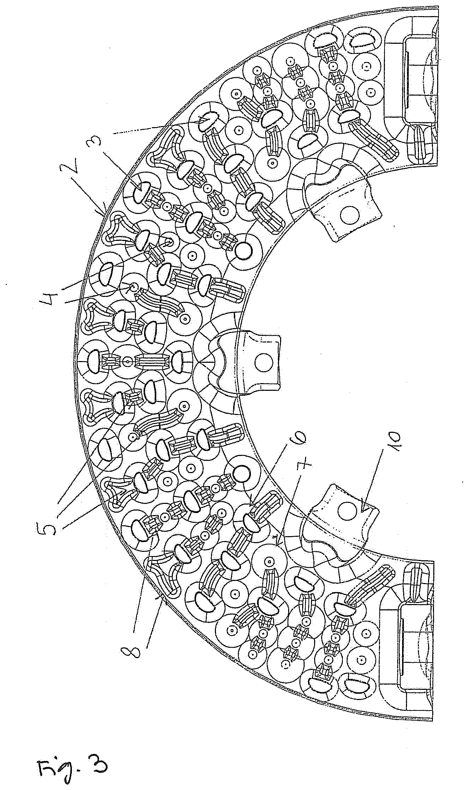

A brake disc 1 which is shown on Fig. 1 to 3 is formed of two coaxial annular plates 2, i.e. friction plates, which are interconnected by load carrying cooling ribs 3. Load carrying cooling ribs 3 are parallel to the rotational axis of the brake disc 1 and are essentially evenly distributed they are positioned in a circular pattern, on the surface of the plates 2 and connect both inner surfaces of both plates 2. Load carrying cooling ribs 3 form the solid structure of the brake disc 1, which serves to transfer and withstand the stresses caused by braking. At least six mounting brackets 10 are positioned at even intervals on the inner periphery of the brake disc 1 for mounting the brake disc 1 on the hub.

Between load carrying cooling ribs 3 small hyperbolically shaped cooling ribs 4 are positioned at certain locations on the inner surface of both plates 2 and are designed in such a way to enable even heat distribution on all surfaces of the brake discs. Evenly distributed heat prevents occurrence of non-allowable stresses. Small hyperbolically shaped cooling ribs 4 are parallel to the rotational axis of the brake disc 1 and protrude from the inner surfaces into the space between the plates 2 and have the height between 10 to 30% of the width of the brake disc 1 preferably their height is 20% of the width of the brake disc 1.

Additionally low profile ribs 5 are positioned on the inner surface of both plates 2. Said low profile ribs 5 connect, essentially in the radial direction, at least two adjacent load carrying cooling ribs 3 or two adjacent small hyperbolically shaped cooling ribs 4 or at least one adjacent load carrying cooling rib 3 and one small hyperbolically shaped cooling rib 4. Low profile ribs 5 also connect some of the load carrying cooling ribs 3 which are positioned along the outer and the inner end of the annular plates 2 with the outer and the inner edge of said annular plates 2. Low profile ribs 5 have the height between 1 to 5% of the width of the brake disc 1, preferably 4 %. Low profile ribs are placed on most critical places for heat dissipation and structural stability which is determined by simulation. Numerous simulations showed that the optimal percentage of connected load carrying cooling ribs 3 and small hyperbolically shaped cooling ribs 4 with low profile ribs 5 should be between 60-80%, i.e. between 60 to 80 % of load carrying cooling ribs 3 and small hyperbolically shaped cooling ribs 4 should be connected by low profile ribs 5.

Load carrying cooling ribs 3 have circular cross-section, preferably ellipsoidal cross-section, small hyperbolically shaped cooling ribs 4 have preferably circular cross section with rounded top. Ellipsoidal cross-section of load carrying cooling ribs 3 is similar to an airfoil, except that it is symmetric, as brake discs are used in both directions of rotation, so the performance of the brake disc should be the same in both directions. Low profile ribs 5 have cross-section selected from various forms such as quadrangle, triangle, semicircle, ellipse segment, trapezoid, whereby the edges are rounded. Low profile ribs 5 have preferably trapezoidal cross-section. Low profile ribs 5 which connect some of the load carrying cooling ribs 3 which are positioned along the outer end of the annular plates 2 with the outer edge of said annular plates 2 have preferably cross section of any shape with variable radius to even more enlarge the area needed for better heat dissipation. For better structural stability, preferably twelve low profile ribs 5 connect load carrying cooling ribs 3 which are positioned along the outer end of the annular plates 2 with the outer edge of said annular plates 2.

All cooling ribs, i.e. load carrying cooling ribs 3, small hyperbolically shaped cooling ribs 4 and low profile ribs 5 have an enlarged cross-section of their base area 6, 7, 8, i.e. at the contact area of the individual rib 3, 4, 5 with the inner surface of the plates 2. The total enlarged cross-section of the base areas 6, 7, 8 is up to 7,5 times higher with regard to the total cross-section area of the cooling ribs 3, 4 and 5. For optimal cooling of the disc, cross-section of the base area 6, 7 and 8 should be enlarged to cover at least 60 % of the inner surface of the plates 2 preferably the base area 6, 7 and 8 should be enlarged to cover between 60 to 67% of the inner surface of the plates 2.
With careful selection of the height and the shape of small hyperbolically shaped cooling ribs 4 and low profile ribs 5 and with careful selection of the position of load carrying cooling ribs 3, small hyperbolically shaped cooling ribs 4 and low profile ribs 5 and with careful selection of the cross-section of the base areas 6, 7 and 8 we can optimize the brake disc according to braking application.

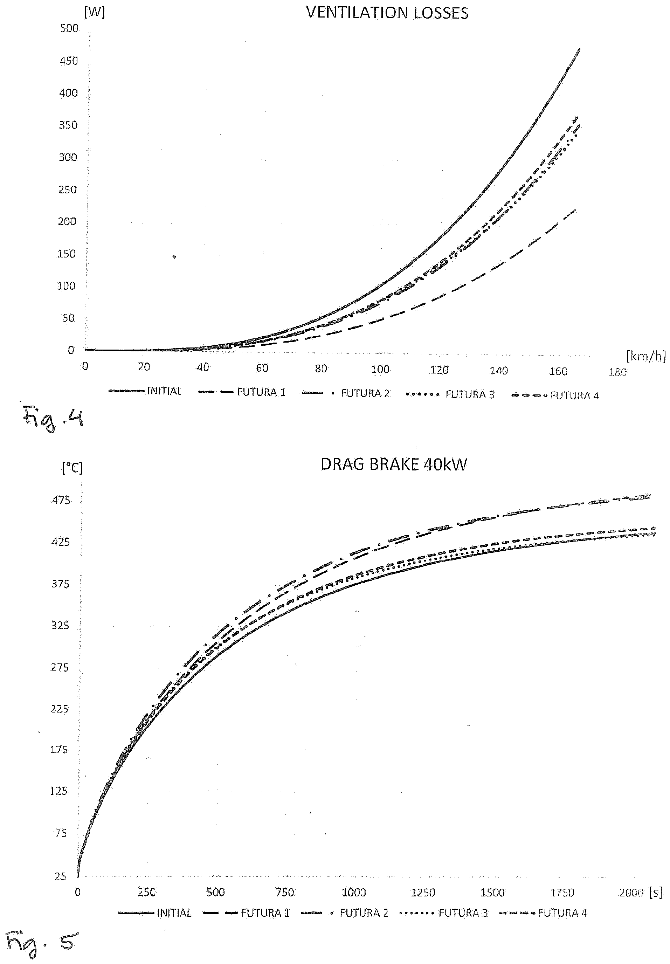

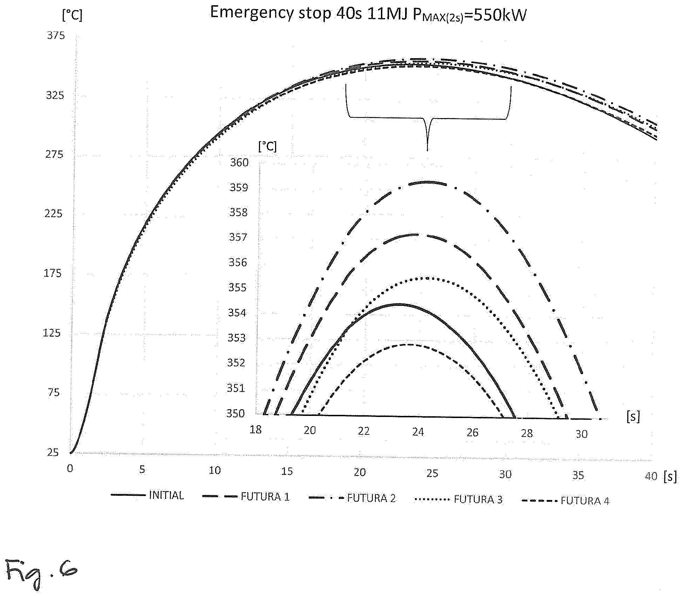

In tables 1 and 2 and in Fig. 4, 5 and 6 different characteristics measured for different designs of brake discs are shown.
Type "Initial" refers to the disc brake with load carrying cooling ribs which are placed in a circular pattern and with a circular cross section which are connected with a net system in the form of 6mm high cooling ribs.
Type "Futura 1" refers to the disc brake with load carrying cooling ribs which are placed in a circular pattern and with an ellipsoidal cross section similar to an airfoil except that it is symmetric as brake discs are used in both directions of rotation. The design also includes a net system in the form of 6mm high cooling ribs connecting load carrying ribs together.
Type "Futura 2" refers to the disc brake with load carrying cooling ribs which are placed in a circular pattern and with a circular cross section. The design includes small hyperbolically shaped cooling ribs and a net system in the form of 6mm high cooling ribs connecting only load carrying ribs. Less load carrying cooling ribs were used as some of them were replaced by small hyperbolically shaped cooling ribs.

Type "Futura 3" is the same as "Futura 2" wherein the middle row of load carrying cooling ribs has an ellipsoidal cross section as in "Futura 1". Additionally only 6 mounting brackets instead of 12 were used for mounting the disc brake to the hub.
Type "Futura 4" refers to the preferred embodiment of the disc brake according to the invention.

**Table 1**

| Type | Mass [kg] | Thermal dissipation efficiency [W/m^2 K kg]: | Emergency brake temperature [°C] | Heat dissipation temperatures at 40 kW drag brake [°C] | Ventilation losses [W] |
|---|---|---|---|---|---|
| Initial | 145 | 1 | 354 | 439 | 475 |
| Futura 1 | 132,8 | 0.859 | 357 | 486 | 230 |
| Futura 2 | 125 | 1.157 | 359 | 483 | 356 |
| Futura 3 | 118 | 1.35 | 355 | 437 | 346 |
| Futura 4 | 114 | | 352 | 445 | 373 |

**Table 2**

| Prototype | Mass [%] | Thermal dissipation efficiency [%] | Ventilation losses [%] |
|---|---|---|---|
| Initial | 100 | 100 | 100 |
| Futura 1 | -8.3 | -14 | -51 |
| Futura 2 | -13.7 | +15.7 | -25 |
| Futura 3 | -18.6 | +35 | -27 |
| Futura 4 | -21.37 | | -22 |

With this construction the area from which heat is dissipated is enlarged and thus heat dissipation towards the center of the brake disc 1 is faster. The average temperature drop, i.e. the average wall heat transfer coefficient of the brake discs cooling ribs area, has risen for about 10 to 15 %. With the proposed construction of the brake disc 1 the mass of the brake disc 1 is reduced for 20%, while keeping the same performance, in comparison with the state-of-the-art non-divided brake disc, which is currently used in freight transport. Said brake disc with improved cooling can be used for divided brake discs and for drag brake.

## Claims

1. A low mass brake disc (1) with improved shape of cooling ribs for disc brake for railway vehicles wherein said brake disc (1) is formed of two coaxial annular plates (2) which are interconnected by load carrying cooling ribs (3) parallel to the rotational axis of the brake disc (1) and essentially evenly distributed on the surface of the plates (2) and connect both inner surfaces of both plates (2) and mounting brackets (10) are positioned at even intervals on the inner periphery of the brake disc (1) for mounting the brake disc (1) on the hub, wherein between load carrying cooling ribs (3) small hyperbolically shaped cooling ribs (4) are positioned and are parallel to the rotational axis of the brake disc (1) and protrude from the inner surfaces into the space between the plates (2) **characterized in that** additionally low profile ribs (5) are positioned on the inner surface of both plates (2) and connect, essentially in the radial direction, at least two adjacent load carrying cooling ribs (3) or two adjacent small hyperbolically shaped cooling ribs (4) or at least one adjacent load carrying cooling rib (3) and one small hyperbolically shaped cooling rib (4) and wherein low profile ribs (5) also connect some of the load carrying cooling ribs (3) which are positioned along the outer and the inner end of the annular plates (2) with the outer and the inner edge of said annular plates (2).

2. A low mass brake disc (1) according to claim 1, **characterized in that** the height of the small hyperbolically shaped cooling ribs (4) is between 10 to 30% of the width of the brake disc (1) preferably their height is 20% of the width of the brake disc (1).

3. A low mass brake disc (1) according to claims 1 and 2, **characterized in that** the height of the low profile ribs (5) is between 1 to 5% of the width of the brake disc (1), preferably 4 %.

4. A low mass brake disc (1) according to previous claims, **characterized in that** between 60 to 80 % of load carrying cooling ribs 3 and small hyperbolically shaped cooling ribs 4 are connected by low profile ribs 5.

5. A low mass brake disc (1) according to previous claims, **characterized in that** load carrying cooling ribs (3) have circular cross-section, preferably ellipsoidal cross-section, small hyperbolically shaped cooling ribs (4) have preferably circular cross section with rounded top and low profile ribs (5) have cross-section selected from various forms such as quadrangle, triangle, semicircle, ellipse segment, trapezoid, whereby the edges are rounded, preferably trapezoidal cross-section.

6. A low mass brake disc (1) according to previous claims, **characterized in that** low profile ribs (5) which connect some of the load carrying cooling ribs (3) which are positioned along the outer end of the annular plates (2) with the outer edge of said annular plates (2) have preferably cross section of any shape with variable radius.

7. A low mass brake disc (1) according to previous claims, **characterized in that** load carrying cooling ribs (3), small hyperbolically shaped cooling ribs (4) and low profile ribs (5) have an enlarged cross-section of their base area (6, 7, 8) at the contact area of the individual rib (3, 4, 5) with the inner surface of the plates (2).

8. A low mass brake disc (1) according to previous claims, **characterized in that** the cross-section of the base area (6, 7 and 8) covers at least 60 % of the inner surface of the plates (2), preferably between 60 to 67% of the inner surface of the plates (2).

9. A low mass brake disc (1) according to previous claims, **characterized in that** the total enlarged cross-section of the base areas (6, 7, 8) is up to 7,5 times higher with regard to the total cross-section area of the cooling ribs (3, 4 and 5).

## Patentansprüche

1. Bremsscheibe (1) mit geringer Masse mit verbesserter Form der Kühlrippen für eine Scheibenbremse für Schienenfahrzeuge, wobei die Bremsscheibe (1) aus zwei koaxialen Ringplatten (2) gebildet wird, die durch lasttragende Kühlrippen (3) parallel zur Drehachse der Bremsscheibe (1) miteinander verbunden sind und im Wesentlichen gleichmäßig auf der Oberfläche der Platten (2) verteilt sind und die Innenflächen beider Platten (2) und Montagewinkel (10), die in gleichmäßigen Abständen am Innenumfang der Bremsscheibe (1) zur Lagerung der Bremsscheibe (1) an der Nabe positioniert sind, wobei zwischen den lasttragenden Kühlrippen (3) kleine hyperbolisch geformte Kühlrippen (4) angeordnet sind , die parallel zur Drehachse der Bremsscheibe (1) verlaufen und von den Innenflächen in den Zwischenraum zwischen den Platten (2) ragen, **dadurch gekennzeichnet, dass** an der Innenfläche beider Platten (2) zusätzlich Tiefprofilrippen (5) angeordnet sind und im Wesentlichen in radialer Richtung zumindest zwei benachbarte lasttragende Kühlrippen (3) oder zwei benachbarte kleine hyperbolisch geformte Kühlrippen (4) oder mindestens eine benachbarte lasttragende Kühlrippe (3) und eine kleine hyperbolisch geformte Kühlrippe (4) miteinander verbinden, und wobei auch Tiefprofilrippen (5) einige der lasttragenden Kühlrippen (3), die entlang des äußeren und des inneren Endes der Ringplatten (2) positioniert sind, mit dem äußeren und dem inneren Rand der ringförmigen Platten (2) verbinden.

2. Bremsscheibe (1) mit geringer Masse nach Anspruch 1, **dadurch gekennzeichnet, dass** die Höhe der kleinen hyperbolisch geformten Kühlrippen (4) zwischen 10 und 30% der Breite der Bremsscheibe (1) beträgt, vorzugsweise ihre Höhe 20% der Breite der Bremsscheibe (1) beträgt.

3. Bremsscheibe (1) mit geringer Masse nach Ansprüchen 1 und 2, **dadurch gekennzeichnet, dass** die Höhe der Tiefprofilrippen (5) zwischen 1 und 5% der Breite der Bremsscheibe (1) beträgt, vorzugsweise 4%.

4. Bremsscheibe (1) mit geringer Masse nach vorangegangenen Ansprüchen, **dadurch gekennzeichnet, dass** zwischen 60 bis 80% der lasttragenden Kühlrippen 3 und der kleinen hyperbolisch geformten Kühlrippen 4 durch Tiefprofilrippen 5 verbunden sind.

5. Bremsscheibe (1) mit geringer Masse nach vorangegangenen Ansprüchen, **dadurch gekennzeichnet, dass** die lasttragenden Kühlrippen (3) einen kreisförmigen Querschnitt, vorzugsweise einen ellipsoiden Querschnitt, aufweisen, die kleinen hyperbolisch geformten Kühlrippen (4) vorzugsweise einen kreisförmigen Querschnitt mit abgerundetem oberem Ende aufweisen, und die Tiefprofilrippen (5) einen Querschnitt aufweisen, der aus verschiedenen Formen, wie Viereck, Dreieck, Halbkreis, Ellipsensegment, Trapez ausgewählt ist, wobei die Kanten abgerundet sind, vorzugsweise einen trapezförmigen Querschnitt aufweisen.

6. Bremsscheibe (1) mit geringer Masse nach vorangegangenen Ansprüchen, **dadurch gekennzeichnet, dass** die Tiefprofilrippen (5), die einige der lasttragenden Kühlrippen (3), die entlang des äußeren Endes der Ringscheiben (2) positioniert sind, mit der Außenwand der ringförmigen Platten (2) verbinden, vorzugsweise einen beliebigen Querschnitt mit variablem Radius aufweisen.

7. Bremsscheibe (1) mit geringer Masse nach vorangegangenen Ansprüchen, **dadurch gekennzeichnet, dass** die lasttragenden Kühlrippen (3), die kleinen hyperbolisch geformten Kühlrippen (4) und die Tiefprofilrippen (5) einen vergrößerten Querschnitt ihrer Grundfläche (6, 7, 8) an der Kontaktfläche der Einzelrippen (3, 4, 5) mit der Innenfläche der Platten (2) aufweisen.

8. Bremsscheibe (1) mit geringer Masse nach vorangegangenen Ansprüchen, **dadurch gekennzeichnet, dass** der Querschnitt der Grundfläche (6, 7 und 8) mindestens 60% der Innenfläche der Platten (2), vorzugsweise zwischen 60 bis 67% der Innenfläche der Platten (2), überdeckt.

9. Bremsscheibe (1) mit geringer Masse nach vorangegangenen Ansprüchen, **dadurch gekennzeichnet, dass** der gesamte vergrößerte Querschnitt der Grundflächen (6, 7, 8) bezogen auf die Gesamtquerschnittsfläche der Kühlrippen (3, 4 und 5) bis zu 7,5-mal größer ist.

## Revendications

1. Disque de frein de faible masse (1) ayant une forme améliorée de nervures de refroidissement pour frein à disque destiné à des véhicules ferroviaires, ledit disque de frein (1) étant formé de deux plaques annulaires coaxiales (2) qui sont reliées entre elles par des nervures de refroidissement porteuses de charge (3) parallèles à l'axe de rotation du disque de frein (1) et qui sont réparties de manière sensiblement uniforme sur la surface des plaques (2) et relient les deux surfaces intérieures des deux plaques (2) et des supports de montage (10) qui sont positionnés à des intervalles réguliers sur la périphérie intérieure du disque de frein (1) pour monter le disque de frein (1) sur le moyeu, entre les nervures de refroidissement porteuses de charge (3) de petites nervures de refroidissement en forme d'hyperbole (4) sont positionnés parallèlement à l'axe de rotation du disque de frein (1) et font saillie à partir des surfaces intérieures dans l'espace entre les plaques (2) **caractérisé en ce qu'**en outre des nervures à profilé bas (5) sont positionnées sur la surface interne des deux plaques (2) et relient, essentiellement dans la direction radiale, au moins deux nervures de refroidissement porteuses de charge adjacentes (3) ou deux petites nervures de refroidissement adjacentes en forme d'hyperbole (4) ou au moins une nervure de refroidissement de transport de charge adjacente (3) et une petite nervure de refroidissement en forme d'hyperbole (4) et où des nervures à profilé bas (5) relient également certaines nervures de refroidissement porteuses de charge (3) qui sont positionnées le long de l'extrémité externe et de l'extrémité interne des plaques annulaires (2) avec le bord extérieur et le bord intérieur desdites plaques annulaires (2).

2. Disque de frein de faible masse (1) selon la revendication 1, **caractérisé en ce que** la hauteur des petites nervures de refroidissement en forme d'hyperbole (4) est comprise entre 10 et 30 % de la largeur du disque de frein (1), leur hauteur étant de préférence égale à 20 % de la largeur du disque de frein (1).

3. Disque de frein de faible masse (1) selon les revendications 1 et 2, **caractérisé en ce que** la hauteur des nervures à profilé bas (5) est comprise entre 1 et 5 % de la largeur du disque de frein (1), de préférence 4 %.

4. Disque de frein de faible masse (1) selon les revendications précédentes, **caractérisé en ce qu'**entre 60 et 80 % des nervures de refroidissement porteuses de charge 3 et des petites nervures de refroidissement en forme d'hyperbole 4 sont reliées par des nervures à profilé bas 5.

5. Disque de frein de faible masse (1) selon les revendications précédentes, **caractérisé en ce que** les nervures de refroidissement porteuses de charge (3) présentent une section transversale circulaire, de préférence une section transversale ellipsoïdale, les petites nervures de refroidissement en forme d'hyperbole (4) ont de préférence une section circulaire avec des nervures supérieures arrondies et les nervures à profilé bas (5) ont une section transversale choisie parmi diverses formes telles qu'un quadrilatère, un triangle, un demi-cercle, un segment d'ellipse, un trapèze, les bords étant arrondis, avec une section transversale de préférence trapézoïdale.

6. Disque de frein de faible masse (1) selon les revendications précédentes, **caractérisé en ce que** les nervures à profilé bas (5) qui relient une partie des nervures de refroidissement porteuses de charge (3) qui sont positionnées le long de l'extrémité extérieure des plaques annulaires (2) avec le bord extérieur desdites plaques annulaires (2) ont de préférence une section transversale de n'importe quelle forme avec un rayon variable.

7. Disque de frein de faible masse (1) selon les revendications précédentes, **caractérisé en ce que** les nervures de refroidissement porteuses de charge (3), les petites nervures de refroidissement en forme d'hyperbole (4) et les nervures à profilé bas (5) ont une section transversale élargie de leur zone de base (6, 7, 8) au niveau de la zone de contact de chaque nervure (3, 4, 5) avec la surface intérieure des plaques (2).

8. Disque de frein de faible masse (1) selon les revendications précédentes, **caractérisé en ce que** la section transversale de la zone de base (6, 7 et 8) recouvre au moins 60 % de la surface interne des plaques (2), de préférence entre 60 et 67 % de la surface interne des plaques (2).

9. Disque de frein de faible masse (1) selon les revendications précédentes, **caractérisé en ce que** la section transversale élargie totale des zones de base (6, 7, 8) est jusqu'à 7,5 fois plus grande que la superficie totale des nervures de refroidissement (3, 4 et 5).
